# FASCICULE DE BREVET EUROPEEN

(11) **EP 2 965 338 B1**
(45) Date de publication et mention de la délivrance du brevet: **22.03.2017**
(21) Numéro de dépôt: 14713515.6
(22) Date de dépôt: 27.02.2014
(51) Int. Cl.: H01H 13/702, A47J 43/046

(54) **TABLEAU DE COMMANDE D'APPAREIL ELECTROMENAGER ET PROCEDE DE FABRICATION D'UN TEL TABLEAU DE COMMANDE**
BEDIENBLENDE FÜR ELEKTRISCHE HAUSHALTSVORRICHTUNG UND VERFAHREN ZUR HERSTELLUNG EINER DERARTIGEN BEDIENBLENDE
HOUSEHOLD ELECTRICAL APPLIANCE CONTROL PANEL AND METHOD OF MANUFACTURING SUCH A CONTROL PANEL

(30) Priorité: 08.03.2013 FR 1352102
(43) Date de publication de la demande: 13.01.2016
(73) Titulaire: SEB S.A., 69130 Ecully (FR)
(72) Inventeur: DESHAYES, Jean-Louis, F-53700 Averton (FR); RETOUR, Stéphane, F-53470 Commer (FR); GERARD, Emmanuel, F-61410 Couterne (FR)
(74) Mandataire: Bourrières, Patrice
(86) Numéro de dépôt international: PCT/FR2014/050434
(87) Numéro de publication internationale: WO 2014/135765

(56) Documents cités:
- EP-A1- 1 626 422
- DE-A1-102006 031 699
- FR-A1- 2 647 588

## Description

La présente invention se rapporte au domaine technique général des tableaux de commande d'appareils électroménagers de préparation culinaire comportant une membrane, avantageusement en polyester, supportée par une pièce support, la membrane comportant des cloques définissant des touches du tableau de commande et la pièce support comportant des ouvertures en regard des cloques destinées à recevoir un interrupteur.

Il est connu, de la demande de brevet FR 2 647 588, un tableau de commande comportant une membrane en matériau plastique semi-rigide comprenant des cloques ayant la forme d'une calotte sphérique tournée vers l'extérieur, la membrane étant collée sur une pièce support. Un tel tableau de commande avec une membrane cloquée présente l'avantage d'assurer une protection étanche des parties électriques du tableau de commande mais aussi une souplesse des touches qui procure une bonne ergonomie d'utilisation.

Toutefois, un tel tableau de commande présente l'inconvénient de posséder un aspect assez terne et peu valorisant. De plus, un tel tableau de commande présente l'inconvénient de pouvoir présenter des infiltrations à la périphérie de la membrane, à la jonction avec le boitier de l'appareil.

Aussi, un but de la présente invention est de proposer un tableau de commande à l'aspect amélioré qui soit simple et économique à réaliser et un procédé de fabrication pour la réalisation d'un tel tableau de commande. Un autre but de la présente invention est de proposer un tableau de commande dans lequel les risques d'infiltration sont limités.

A cet effet, l'invention se rapporte à un tableau de commande d'appareil électroménager comprenant une membrane supportée par une pièce support, la membrane comportant des cloques définissant des touches du tableau de commande, la pièce support comportant des ouvertures en regard des cloques destinées à recevoir un interrupteur, caractérisé en ce que la membrane et la pièce support sont respectivement réalisées dans un premier et un deuxième matériau non métallisable chimiquement et en ce que la pièce support comporte au moins une partie non recouverte par la membrane sur laquelle est surmoulé une pièce d'ornement en matériau chimiquement métallisable, la pièce d'ornement comportant une surface externe qui est métallisée par voie humide en plongeant conjointement la pièce support, la membrane et la pièce d'ornement dans un bain contenant le métal à déposer sur la pièce d'ornement.

Selon une autre caractéristique de l'invention, la membrane est en polyester.

Selon une autre caractéristique de l'invention, la pièce support est réalisée en polycarbonate ou dans un matériau appartenant à la famille des copolyesters.

Selon encore une autre caractéristique de l'invention, la pièce d'ornement est réalisée en matériau ABS (Acrylonitrile Butadiene Styrene).

Selon encore une autre caractéristique de l'invention, la pièce d'ornement est chromée.

Selon une autre caractéristique de l'invention, la pièce support est surmoulée sur la membrane.

Selon une autre caractéristique de l'invention, la membrane est transparente et comporte une face inférieure sur laquelle est imprimé le motif du tableau de commande et notamment un marquage des touches.

Selon une autre caractéristique de l'invention, la pièce support est transparente, la face inférieure de la membrane comportant une zone dépourvue d'impression, la zone constituant une fenêtre du tableau de commande donnant un accès visuel à un afficheur.

L'invention concerne également un appareil électroménager de préparation culinaire, comportant un tableau de commande tel que précédemment décrit.

L'invention se rapporte aussi à un procédé de fabrication d'un tableau de commande d'appareil électroménager de préparation culinaire comportant une membrane comportant une face supérieure comprenant des cloques au niveau de touches, la membrane étant réalisée dans un premier matériau non métallisable chimiquement, caractérisé en ce que,
- on rapporte sur la face inférieure de la membrane une pièce support comportant des ouvertures en regard des cloques, la pièce support étant réalisée dans un deuxième matériau non métallisable chimiquement,
- on surmoule une pièce d'ornement sur au moins une partie de la pièce support et/ou de la membrane, la pièce d'ornement étant réalisée dans un matériau chimiquement métallisable,
- on métallise chimiquement par voie humide la pièce d'ornement.

Selon une autre caractéristique de l'invention, la pièce d'ornement est revêtue de chrome en plongeant conjointement la pièce support, la membrane et la pièce d'ornement dans un bain de chrome.

Selon une autre caractéristique de l'invention, la pièce support est surmoulée sur la membrane.

Selon une autre caractéristique de l'invention, la membrane est réalisée en polyester transparent.

Selon une autre caractéristique de l'invention, un marquage est imprimé sur la face inférieure de la membrane, avant la phase de surmoulage de la pièce support sur la membrane.

Selon une autre caractéristique de l'invention, la pièce support est réalisée en polycarbonate ou dans un matériau appartenant à la famille des copolyesters.

Selon une autre caractéristique de l'invention, la pièce d'ornement est réalisée en matériau ABS (Acrylonitrile Butadiene Styrene).

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective éclatée d'un appareil de préparation culinaire selon un mode particulier de réalisation de l'invention ;
- la figure 2 est une vue en coupe longitudinale de l'appareil de la figure 1 ;
- les figures 3A et 3B sont respectivement des vues en perspective du dessus et du dessous de la membrane cloquée du tableau de commande équipant l'appareil de la figure 1 ;
- les figures 4A et 4B sont respectivement des vues en perspective du dessus et du dessous du tableau de commande après la première phase de moulage de la pièce support au dos de la membrane ;
- les figure 5A et 5B sont respectivement des vues en perspective du dessus et du dessous du tableau de commande après la phase de moulage de la pièce d'ornement en matière plastique ;
- la figure 6 est une vue en coupe du tableau de commande selon la ligne VI-VI de la figure 5A.

Seuls les éléments nécessaires à la compréhension de l'invention ont été représentés. Pour faciliter la lecture des dessins, les mêmes éléments portent les mêmes références d'une figure à l'autre.

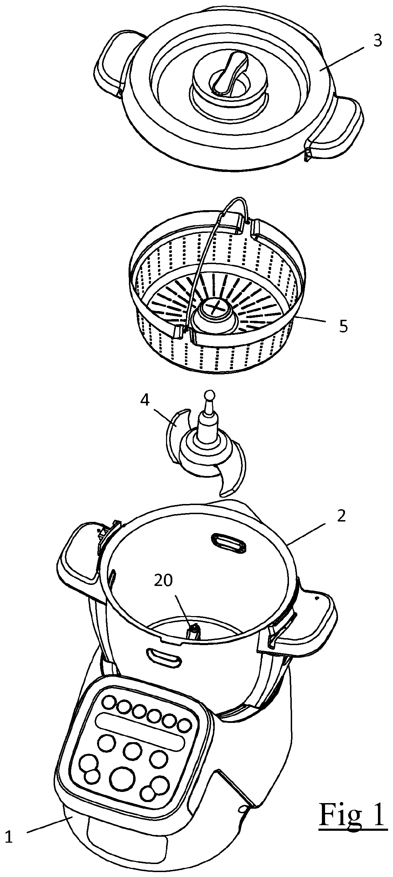

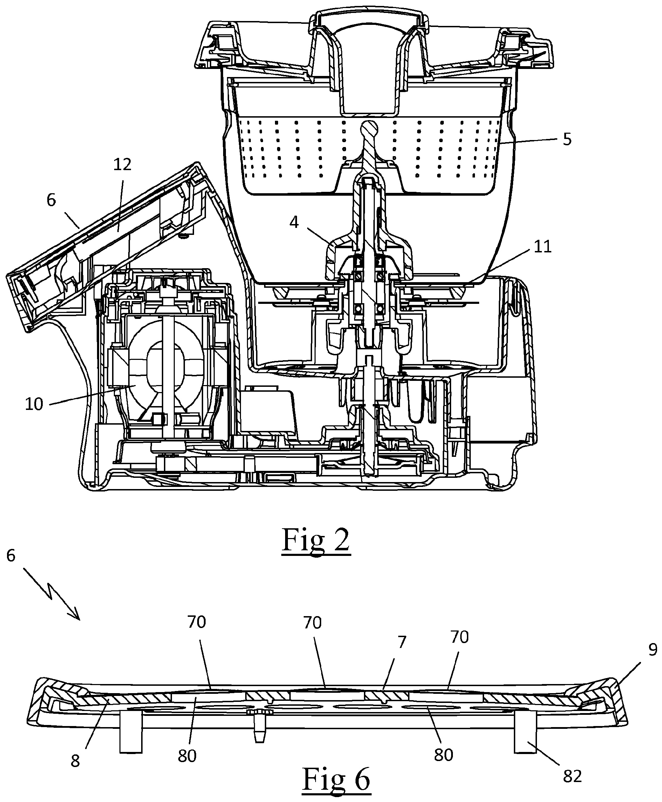

Les figures 1 et 2 représentent un appareil de préparation culinaire comportant un boîtier 1 supportant un récipient de travail 2 amovible muni d'un couvercle de fermeture 3, le récipient de travail 2 comportant un fond équipé d'un entraîneur 20 rotatif relié par une chaine cinématique à un moteur 10, visible uniquement sur la figure 2, l'entraîneur 20 pouvant recevoir un outil 4 permettant de hacher les aliments disposés dans le fond du récipient de travail 2.

Le récipient de travail 2 est avantageusement réalisé en acier inox et repose sur une plaque chauffante 11 intégrée dans le boîtier 1, la plaque chauffante 11 comportant une face inférieure munie d'une résistance, du type résistance blindée, permettant de chauffer le contenu du récipient de travail 2, la partie supérieure du récipient de travail pouvant recevoir un panier 5 pour la cuisson à la vapeur.

La plaque chauffante 11 et le moteur 10 sont pilotés, de manière connue en soi, par une carte électronique 12 disposée sous un tableau de commande 6 présent sur une face avant du boîtier 1, cette carte électronique 12 recevant la valeur de la température mesurée par un palpeur de température et assurant la régulation de l'alimentation de la plaque chauffante 11 de façon à amener le contenu du récipient de travail 2 à une température de consigne.

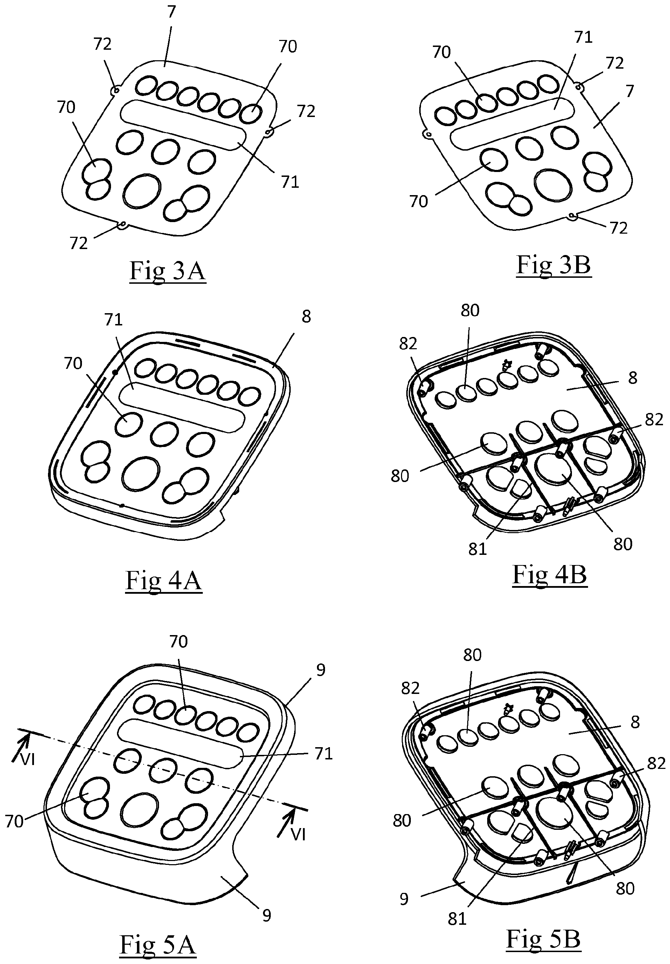

Conformément aux figure 3A et 3B, le tableau de commande 6 comporte une membrane 7 transparente réalisée dans un premier matériau non métallisable chimiquement, préférentiellement du polyester, la membrane 7 comprenant une face supérieure comportant un clavier muni de touches constituées par des cloques 70 qui, lorsqu'elles sont pressées, coopèrent avec des interrupteurs portés par la carte électronique, non représentés sur les figures.

De manière avantageuse, les cloques 70 présentent la forme d'une calotte sphérique dont la convexité est tournée vers l'extérieur du tableau de commande 6 et la face inférieure de la membrane 7 est imprimée avec un motif intégrant un marquage, non représenté sur les figures, au niveau de chaque cloque 70 pour illustrer la fonction des touches.

A titre d'exemple, la face inférieure de la membrane 7 est recouverte d'une couleur noire sur la majeure partie de sa surface et comporte un marquage d'une autre couleur au niveau des cloques 70 pour illustrer la fonction des touches, la membrane 7 conservant une zone 71 dépourvue de toute impression définissant une fenêtre donnant un accès visuel à un afficheur porté par la carte électronique 12.

Conformément aux figures 4A, 4B et 6, la membrane 7 est rapportée sur une pièce support 8 transparente comportant des ouvertures 80 en regard des cloques 70, la pièce support 8 étant avantageusement surmoulée sur la face inférieure de la membrane 7 et comportant un bord périphérique venant recouvrir le pourtour de la surface supérieure de la membrane 7.

La pièce support 8 est réalisée dans un deuxième matériau plastique non métallisable chimiquement, par exemple du polycarbonate ou un matériau plastique de la famille des copolyesters tel que du Tritan™ commercialisé par la société Eastman, et présente une face inférieure comportant des nervures 81 renforçant la rigidité de la pièce support 8 ainsi que des plots 82 pour la fixation de la carte électronique 12.

Cette opération de surmoulage est réalisée en plaçant la membrane 7 dans un moule, la pièce support 8 comportant trois trous 72 de positionnement coopérant avec des pions du moule pour assurer le bon positionnement de la membrane 7, puis en injectant la deuxième matière plastique dans le moule après fermeture de ce dernier.

Conformément aux figures 5A, 5B et 6, le tableau de commande 6 comporte une pièce d'ornement constituée par un cadre 9 qui est surmoulé sur la pièce support 8, ce cadre 9 étant réalisé dans un matériau apte à être métallisé chimiquement, par exemple en matière plastique de type ABS (Acrylonitrile Butadiene Styrene).

Le sous ensemble ainsi réalisé, comprenant la membrane 7, la pièce support 8 et le cadre 9, passe ensuite tout entier à travers un bain de chrome pour le revêtement par galvanisation de la surface externe du cadre 9. Etant donné que seule la matière plastique du cadre 9 se prête à être revêtue de chrome, une couche de chrome adhère sur le cadre 9 mais pas sur la membrane 7 et la pièce support 8.

On obtient ainsi un tableau de commande simple et économique à réaliser, muni d'un cadre chromée mettant en valeur le clavier, pour lequel le risque d'infiltration au travers du tableau de commande est éliminé grâce à la liaison étanche qui s'établie entre la membrane, la pièce support et le cadre lors des opérations de surmoulage, la périphérie de la membrane étant de plus prise en sandwich entre la pièce support et le cadre.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, le cadre pourra être revêtu d'un autre métal que du chrome, par exemple du cuivre.

Dans une autre variante de réalisation non représentée, la pièce support pourra être réalisée dans un autre type de matériau qui ne se prête pas à être revêtue de métal par voie chimique, tel que du polypropylène ou du polyamide.

## Revendications

1. Tableau de commande (6) d'appareil électroménager comprenant une membrane (7) supportée par une pièce support (8), la membrane (7) comportant des cloques (70) définissant des touches du tableau de commande (6), la pièce support (8) comportant des ouvertures (80) en regard desdites cloques (70) destinées à recevoir un interrupteur, **caractérisé en ce que** la membrane (7) et la pièce support (8) sont respectivement réalisées dans un premier et un deuxième matériau non métallisable chimiquement et **en ce que** la pièce support (8) comporte au moins une partie non recouverte par la membrane (7) sur laquelle est surmoulé une pièce d'ornement (9) en matériau chimiquement métallisable, la pièce d'ornement (9) comportant une surface externe qui est métallisée par voie humide en plongeant conjointement la pièce support (8), la membrane (7) et la pièce d'ornement (9) dans un bain contenant le métal à déposer sur la pièce d'ornement (9).

2. Tableau de commande selon la revendication 1, **caractérisé en ce que** la membrane (7) est en polyester.

3. Tableau de commande selon l'une quelconque des revendications 1 à 2, **caractérisé en ce que** la pièce support (8) est réalisée en polycarbonate ou dans un matériau appartenant à la famille des copolyesters.

4. Tableau de commande selon l'une quelconque des revendications 1 à 3, **caractérisé en ce que** la pièce d'ornement (9) est réalisée en matériau ABS (Acrylonitrile Butadiene Styrene).

5. Tableau de commande selon l'une quelconque des revendications 1 à 4, **caractérisé en ce que** la pièce d'ornement (9) est chromée.

6. Tableau de commande selon l'une quelconque des revendications 1 à 5, **caractérisé en ce que** la pièce support (8) est surmoulée sur la membrane (7).

7. Tableau de commande selon l'une quelconque des revendications 1 à 6, **caractérisé en ce que** la membrane (7) est transparente et comporte une face inférieure sur laquelle est imprimé le motif du tableau de commande (6) et notamment un marquage des touches.

8. Tableau de commande selon l'une quelconque des revendications 1 à 7, **caractérisé en ce que** ladite pièce support (8) est transparente et **en ce que** la face inférieure de la membrane (7) comporte une zone (71) dépourvue d'impression, ladite zone (71) constituant une fenêtre du tableau de commande (6) donnant un accès visuel à un afficheur.

9. Appareil électroménager de préparation culinaire, **caractérisé en ce qu'**il comporte un tableau de commande (6) selon l'une quelconque des revendications 1 à 8.

10. Procédé de fabrication d'un tableau de commande (6) d'appareil électroménager de préparation culinaire comportant une membrane (7) comportant une face supérieure comprenant des cloques (70) au niveau de touches, la membrane (7) étant réalisée dans un premier matériau non métallisable chimiquement, **caractérisé en ce que**,
- on rapporte sur la face inférieure de la membrane (7) une pièce support (8) comportant des ouvertures (80) en regard des cloques (70), la pièce support (8) étant réalisée dans un deuxième matériau non métallisable chimiquement,
- on surmoule une pièce d'ornement (9) sur au moins une partie de la pièce support (8) et/ou de la membrane (7), la pièce d'ornement étant réalisée dans un matériau chimiquement métallisable,
- on métallise chimiquement par voie humide la pièce d'ornement (9).

11. Procédé de fabrication selon la revendication 10, **caractérisé en ce que** la pièce d'ornement (9) est revêtue de chrome en plongeant conjointement la pièce support (7), la membrane (8) et la pièce d'ornement (9) dans un bain de chrome.

12. Procédé de fabrication selon l'une quelconque des revendications 10 à 11, **caractérisé en ce que** la pièce support (8) est surmoulée sur la membrane (7).

13. Procédé de fabrication selon l'une quelconque des revendications 10 à 12, **caractérisé en ce que** la membrane (7) est réalisée en polyester transparent.

14. Procédé de fabrication selon la revendication 13, **caractérisé en ce qu'**un marquage est imprimé sur la face inférieure de la membrane (7), avant la phase de surmoulage de la pièce support (8) sur la membrane (7).

15. Procédé de fabrication selon l'une quelconque des revendications 10 à 14, **caractérisé en ce que** la pièce support (8) est réalisée en polycarbonate ou dans un matériau appartenant à la famille des copolyesters.

16. Procédé de fabrication selon l'une quelconque des revendications 10 à 15, **caractérisé en ce que** la pièce d'ornement (9) est réalisée en matériau ABS (Acrylonitrile Butadiene Styrene).

## Patentansprüche

1. Bedienfeld (6) eines Elektrohaushaltsgeräts bestehend aus einer Membran (7), die von einem Trägerteil (8) gestützt wird, wobei die Membran (7) Blasen (70) aufweist, welche die Tasten des Bedienfelds (6) definieren, wobei das Trägerteil (8) Öffnungen (80) zur Aufnahme eines Schalters aufweist, die diesen Blasen (70) gegenüberliegen, **dadurch gekennzeichnet, dass** die Membran (7) und das Trägerteil (8) jeweils aus einem ersten und einem zweiten nicht chemisch metallisierbaren Material hergestellt sind und dass mindestens ein Teil des Trägerteils (8) nicht von der Membran (7) bedeckt ist, auf der ein Zierelement (9) aus chemisch metallisierbarem Material aufgeformt wird, wobei das Zierelement (9) eine Außenfläche aufweist, welche durch gemeinsames Eintauchen von Trägerteil (8), Membran (7) und Zierelement (9) in ein Bad mit dem auf das Zierelement (9) aufzubringenden Metall nass metallisiert wird.

2. Bedienfeld nach Anspruch 1, **dadurch gekennzeichnet, dass** die Membran (7) aus Polyester besteht.

3. Bedienfeld nach einem der Ansprüche 1 bis 2, **dadurch gekennzeichnet, dass** das Trägerteil (8) aus Polycarbonat oder aus einem Material aus der Familie der Copolyester besteht.

4. Bedienfeld nach einem der Ansprüche 1 bis 3, **dadurch gekennzeichnet, dass** das Zierelement (9) aus ABS-Material (Acrylnitril-Butadien-Styrol) besteht.

5. Bedienfeld nach einem der Ansprüche 1 bis 4, **dadurch gekennzeichnet, dass** das Zierelement (9) verchromt ist.

6. Bedienfeld nach einem der Ansprüche 1 bis 5, **dadurch gekennzeichnet, dass** das Trägerteil (8) auf die Membran (7) aufgeformt ist.

7. Bedienfeld nach einem der Ansprüche 1 bis 6, **dadurch gekennzeichnet, dass** die Membran (7) transparent ist und eine Unterseite aufweist, auf welche das Muster des Bedienfelds (6) aufgedruckt ist und insbesondere eine Kennzeichnung der Tasten.

8. Bedienfeld nach einem der Ansprüche 1 bis 7, **dadurch gekennzeichnet, dass** dieses Trägerteil (8) transparent ist und dass die Unterseite der Membran (7) einen nicht bedruckten Bereich (71) aufweist, wobei dieser Bereich (71) als ein Fenster des Bedienfelds (6) für den visuellen Zugang zu einer Anzeige ausgebildet ist.

9. Elektrohaushaltsgerät zur Zubereitung von Nahrungsmitteln nach einem der Ansprüche 1 bis 8, **dadurch gekennzeichnet, dass** dieses ein Bedienfeld (6) aufweist.

10. Herstellungsverfahren für ein Bedienfeld (6) eines Elektrohaushaltsgeräts zur Zubereitung von Nahrungsmitteln mit einer Membran (7), bestehend aus einer Oberseite mit Blasen (70) auf Höhe der Tasten, wobei die Membran (7) aus einem ersten nicht chemisch metallisierbaren Material besteht, **dadurch gekennzeichnet, dass**
- auf die Unterseite der Membran (7) ein Trägerteil (8) mit Öffnungen (80), die gegenüber der Blasen (70) liegen, aufgebracht wird, wobei das Trägerteil (8) aus einem zweiten nicht chemisch metallisierbarem Material besteht,
- ein Zierelement (9) auf mindestens einem Teil des Trägerteils (8) und/oder der Membran (7) aufgeformt wird, wobei das Zierelement aus einem chemisch metallisierbarem Material besteht,
- das Zierelement (9) nasschemisch metallisiert wird.

11. Herstellungsverfahren nach Anspruch 10, **dadurch gekennzeichnet, dass** das Zierelement (9) durch gemeinsames Eintauchen von Trägerteil (7), Membran (8) und Zierelement (9) in ein Chrombad verchromt wird.

12. Herstellungsverfahren nach einem der Ansprüche 10 bis 11, **dadurch gekennzeichnet, dass** das Trägerteil (8) auf die Membran (7) aufgeformt wird.

13. Herstellungsverfahren nach einem der Ansprüche 10 bis 12, **dadurch gekennzeichnet, dass** die Membran (7) aus transparentem Polyester gefertigt wird.

14. Herstellungsverfahren nach Anspruch 13, **dadurch gekennzeichnet, dass** vor der Aufformphase des Trägerteils (8) auf die Membran (7) eine Markierung auf die Unterseite der Membran (7) aufgedruckt wird.

15. Herstellungsverfahren nach einem der Ansprüche 10 bis 14, **dadurch gekennzeichnet, dass** das Trägerteil (8) aus Polycarbonat oder aus einem Material aus der Familie der Copolyester besteht.

16. Herstellungsverfahren nach einem der Ansprüche 10 bis 15, **dadurch gekennzeichnet, dass** das Zierelement (9) aus ABS-Material (AcrylnitrilButadien-Styrol) besteht.

## Claims

1. Control panel (6) of a household electrical appliance comprising a membrane (7) carried by a support part (8), the membrane (7) having blisters (70) defining keys of the control panel (6), the support part (8) having openings (80) opposite said blisters (70) for receiving a switch, **characterised in that** the membrane (7) and the support part (8) are respectively made of first and second non chemically metallisable materials and **in that** the support part (8) comprises at least a part not covered by the membrane (7) on which an ornamental part (9) made of a chemically metallisable material is overmoulded, the ornamental part (9) having an outer surface which is metallised by wet processing by immersing the support part (8), the membrane (7) and the ornamental part (9) together in a bath containing the metal to be deposited on the ornamental part (9).

2. Control panel according to claim 1, **characterised in that** the membrane (7) is made of polyester.

3. Control panel according to claim 1 or 2, **characterised in that** the support part (8) is made of polycarbonate or in a material belonging to the family of copolyesters.

4. Control panel according to any one of claims 1 to 3, **characterised in that** the ornamental part (9) is made of ABS (Acrylonitrile Butadiene Styrene).

5. Control panel according to any one of claims 1 to 4, **characterised in that** the ornamental part (9) is chrome plated.

6. Control panel according to any one of claims 1 to 5, **characterised in that** the support part (8) is overmoulded on the membrane (7).

7. Control panel according to any one of claims 1 to 6, **characterised in that** the membrane (7) is transparent and has a lower side on which the pattern of the control panel (6) and in particular a marking of the keys are printed.

8. Control panel according to any one of claims 1 to 7, **characterised in that** said support part (8) is transparent and **in that** the lower side of the membrane (7) has an area (71) with no printing, said area (71) forming a window of the control panel (6) providing visual access to a display.

9. Food preparation household electrical appliance, **characterised in that** it comprises a control panel (6) according to any one of claims 1 to 8.

10. Method for manufacturing a control panel (6) of a food preparation household electrical appliance comprising a membrane (7) having an upper side including blisters (70) at the keys, the membrane (7) being made of a first non chemically metallisable material, **characterised in that**,
- a support part (8) having openings (80) opposite the blisters (70) is added to the lower side of the membrane (7), the support part (8) being made of a second non chemically metallisable material,
- an ornamental part (9) is overmoulded on at least a portion of the support part (8) and/or of the membrane (7), the ornamental part being made of a chemically metallisable material,
- the ornamental part (9) is chemically metallised by wet processing.

11. Manufacturing method according to claim 10, **characterised in that** the ornamental part (9) is coated with chromium by immersing the support part (7), the membrane (8) and the ornamental part (9) together in a chromium bath.

12. Manufacturing method according to claim 10 or 11, **characterised in that** the support part (8) is overmoulded on the membrane (7).

13. Manufacturing method according to any one of claims 10 to 12, **characterised in that** the membrane (7) is made of transparent polyester.

14. Manufacturing method according to claim 13, **characterised in that** a marking is printed on the lower side of the membrane (7), before the phase of overmoulding the support part (8) on the membrane (7).

15. Manufacturing method according to any one of claims 10 to 14, **characterised in that** the support part (8) is made of polycarbonate or in a material belonging to the family of copolyesters.

16. Manufacturing method according to any one of claims 10 to 15, **characterised in that** the ornamental part (9) is made of ABS (Acrylonitrile Butadiene Styrene).
